# EUROPEAN PATENT SPECIFICATION

(11) **EP 0 554 041 B1**
(45) Date of publication and mention of the grant of the patent: **02.05.1997**
(21) Application number: 93300538.1
(22) Date of filing: 26.01.1993
(51) Int. Cl.: H04N 7/00, G11B 27/30

(54) **Detector and method for detecting a predetermined digital signal code**
Erkennungsgerät und Verfahren zur Erkennung eines vorgegebenen, digitalen Signal-Kodes
Détecteur et procédé pour la détection d'un code numérique prédéterminé d'un signal

(30) Priority: 31.01.1992 KR 157392
(43) Date of publication of application: 04.08.1993
(73) Proprietor: Samsung Electronics Co., Ltd., Suwon-city, Kyungki-do 441-370 (KR)
(72) Inventor: Maeng, Jeong-Jae, Seongbuk-ku, Seoul (KR)
(74) Representative: Read, Matthew Charles

(56) References cited:
- EP-A- 0 200 269
- EP-A- 0 419 380
- US-A- 4 713 692

## Description

The present invention relates to a sync detector and a method for detecting a predetermined digital signal code. The present invention has particular, though not exclusive, application in the detection of frame synchronising signals in D/D2 MAC television signals.

The frame synchronizing signals in D/D2 MAC television signals comprise 64 bits of digital data. The even frame synchronizing signal can be represented in hexadecimal code as 65 AE F3 15 3F 41 C2 46. This data is transmitted as a binary code signal of the form 0110 0101 1010 1110 ..... 0100 0110.

The odd frame synchronizing signal comprises the 1's complement of the even frame synchronizing signal and is, consequently, of the form 1001 1010 0101 0001 ..... 1011 1001.

A known sync detector, suitable for detecting D/D2 MAC frame synchronizing signals is shown in Figure 1. The circuit comprises an even frame synchronizing signal detecting portion 1, an odd frame synchronizing signal detecting portion 2, an OR gate OR1 and an inverter gate NOT 1.

An input signal is supplied to the even frame synchronizing signal detecting portion 1 and to the inverter gate NOT 1 which is connected to an input terminal of the odd frame synchronizing signal detecting portion 2. The even frame synchronizing signal detecting portion 1 and the odd frame synchronizing signal detecting portion 2 are connected to respective input terminals of the OR gate OR1.

The even frame synchronizing signal detection portion 1 comprises 64 cascaded shift registers, 64 exclusive OR gates XOR1-XOR64 and an AND gate AND1. The odd frame synchronizing signal detecting portion 2 has circuitry similar to the even frame synchronizing signal detecting portion 2.

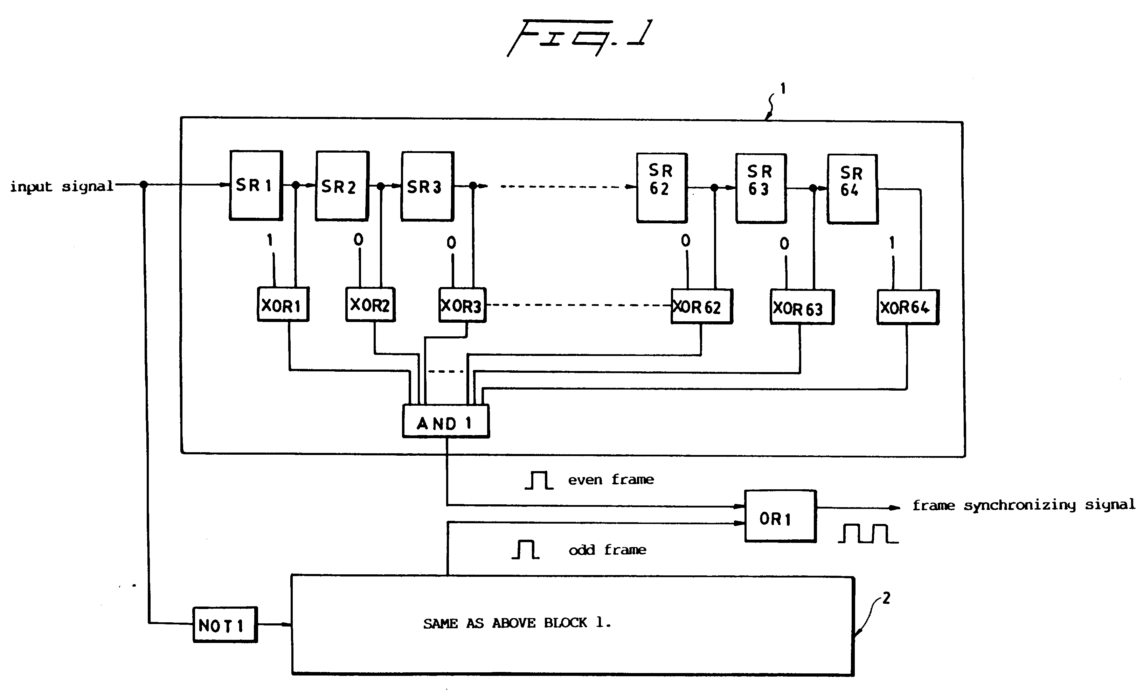

The operation of the circuit of Figure 1 will now be described. A received input signal is applied to either the shift register SR1 of the even frame synchronizing signal detecting portion 1 or the inverter gate NOT 1. The input signal is shifted through shift registers SR1-SR64 and the output of each of the shift registers SR1-SR64 is input into one input of a respective one of the exclusive OR gates XOR1-XOR64.

The other inputs of the exclusive OR gates XOR1-XOR64 are pre-set respectively, in reverse order, with the synchronizing signal 1's complement values (1001 1101 1011 1100 0111 1101 0000 0011 0101 0111 0011 0000 1000 1010 0101 1001), so that, when an even frame synchronizing signal is input, the outputs of the exclusive OR gates XOR1-XOR64 go to logic '1'. The outputs of the OR gates XOR1-XOR64 are applied to respective inputs of the AND gate AND1 and when all the inputs to the AND gate AND1 are at logic '1' the output of the AND gate AND1 goes to logic '1', indicating the detection of an even frame synchronizing signal. The output of the AND gate AND1 is applied to an input of the OR gate OR1.

The odd frame synchronizing signal detecting portion 2 detects odd frame synchronizing signals in the same manner as the even frame synchronzing signal detection portion 1 but operates on the signal inverted by the inverter NOT 1.

Sync signal detectors of the type described above suffer from the disadvantage that a sync signal will not be detected if even one bit of the synchronizing signal is corrupted. Furthermore, a large number of circuit elements are required, for instance 128 shift registers, 128 exclusive OR gates and various other logic elements in the case of a circuit for detecting D/D2 MAC frame synchronizing signals. This results in a complex, uneconomical and undesirably bulky circuit.

It is an aim of the present invention to overcome the aforementioned disadvantages.

According to the present invention, there is provided a detector for detecting a predetermined digital signal code comprising: means for identifying a potential code portion of an input signal from the presence therein of a predetermined bit subsequence from said predetermined digital signal code; reference code producing means responsive to the means for identifying a potential code portion to produce a reference code; comparing means for serially comparing the reference code bit-for-bit with an identified potential code portion; and counting means responsive to the comparing means to count the number of bits of an identified potential code portion which match the corresponding bits of the reference code, and output a code detected signal when a predetermined count value is reached.

The present invention overcomes the problem of the conventional technique's failure to detect, for example, sync signals which are slightly corrupted by carrying out a rigorous comparison on a number of bits which is less than the length of the sync signal and then counting the number of bits of a potential sync code portion of an input signal which correspond to the sync code. The predetermined count value may be set so that a sync detected signal will be produced even if the counted value indicates that some bits of the potential sync code portion do not correspond to respective bits of the sync code.

The number of circuit elements can be reduced as the first comparing means may be implemented using only the number of shift registers and exclusive OR gates required to identify a potential sync code portion of an input signal.

Preferably, the predetermined bit subsequence is a predetermined number of initial bits of said code.

Preferably, the reference code producing means comprises a pseudo-random number generator. The pseudo-random number generator may be seeded with a predetermined number of initial bits of said code.

Preferably, the comparing means includes inverter means for inverting the reference code and means for comparing the inverted reference code with said potential code portion.

Preferably, the reference code is a sync code of a D MAC or D2 MAC signal.

Preferably, the predetermined count value is less than the number of bits in the reference code.

According to the present invention, there is also provided a method of detecting a predetermined digital signal code comprising the steps of:
(a) identifying a potential code portion of an input signal from the presence therein of a predetermined bit subsequence from said predetermined digital signal code;
(b) producing a reference code in reponse to an identification made in step (a) ;
(c) counting the number of bits of said potential code portion which match the corresponding bit in the reference code; and
(d) indicating that the predetermined code has occured in the input signal, if the result of step (c) is greater than a predetermined value.

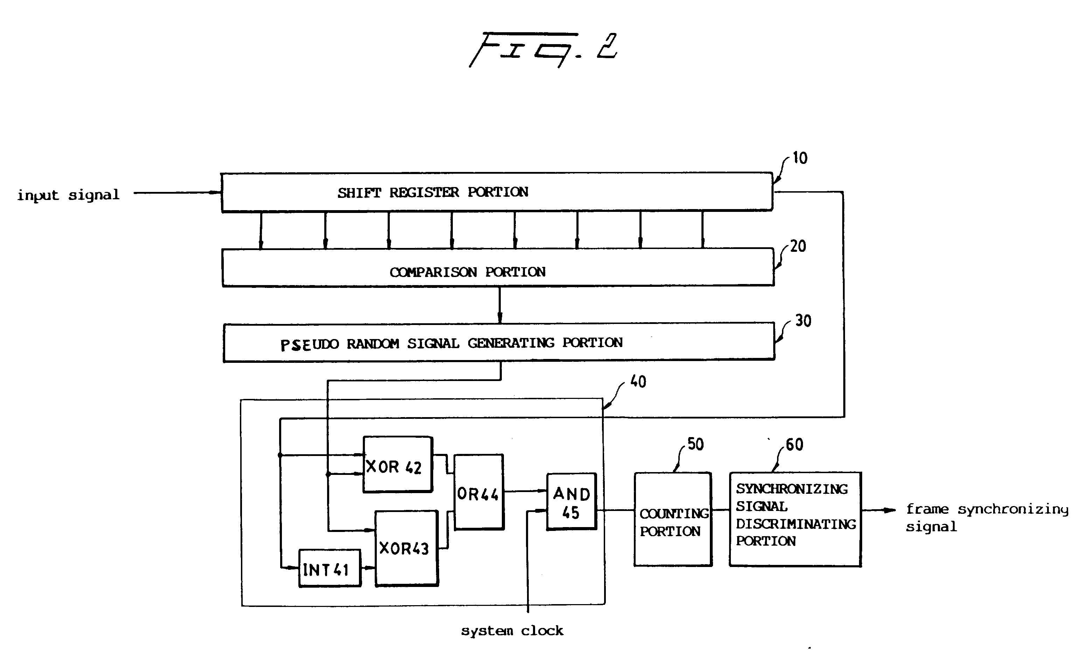

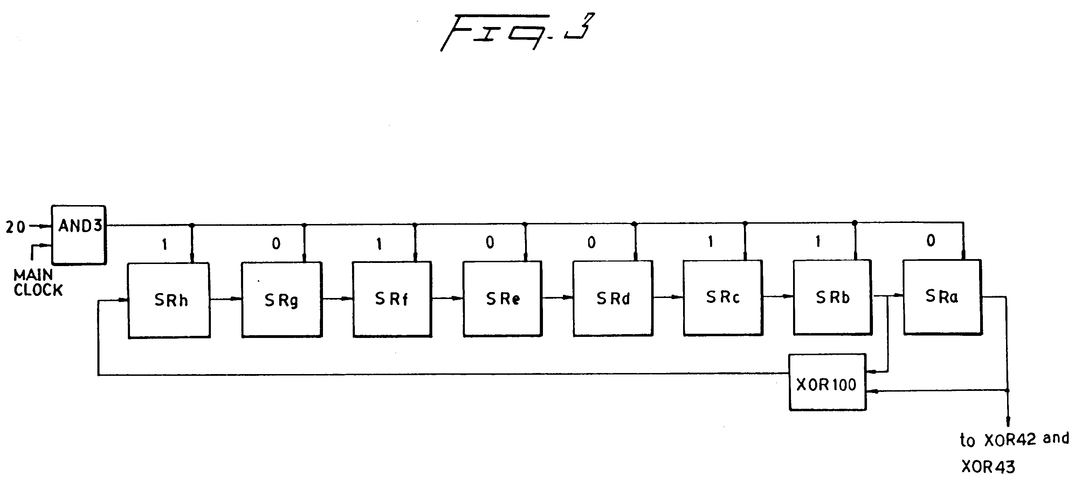

An embodiment of the present invention will now be described, by way of example, with reference to Figures 2 and 3 of the accompanying drawings, in which:
Figure 1 is a block diagram of a prior art sync detector;
Figure 2 is a block diagram of a sync detector according to the present invention; and
Figure 3 is a citcuit diagram of a pseudo-random number generator.

Referring to Figure 2, the comparator portion 20 is connected to the output of each stage of the shift register portion 10 and is coupled by its output to a pseudo-random signal
(c) counting the number of bits of said potential code portion which correspond to respective bits of the reference code; and
(d) indicating that the predetermined code has occurred in the input signal, if the result of step (c) is greated than a predetermined value.

An embodiment of the present invention will now be described, by way of example, with reference to Figures 2 and 3 of the accompanying drawings, in which:
Figure 1 is a block diagram of a prior art sync detector;
Figure 2 is a block diagram of a sync detector according to the present invention; and
Figure 3 is a circuit diagram of a pseudo random signal generator.

The comparison portion 20 is connected to the output of each stage of the shift register portion 10 and is coupled by its output to a pseudo random signal generating portion 30, which in turn is connected to the logic portion 40 along with an output of the shift register portion 10.

The logic portion 40, which comprises a plurality of logic gates, receives the outputs of the pseudo random signal generating portion 30 and the shift register portion 10 and the system clock. A counting portion 50 receives the output from the logic portion 40. A synchronizing signal discriminating portion 60 receives the output from the counting portion 50.

In the logic portion 40, the output of the right hand stage of the shift register portion 10 is input into one input of an exclusive OR gate XOR42 and simultaneously into an inverter INT41.

The output of the pseudo random signal generating portion 30 is respectively connected to an input terminal of an exclusive OR gate XOR43, one input terminal of which is also connected to the output of the inverter INT41, and to an input terminal of the exclusive OR gate XOR42.

The exclusive OR gates XOR42 and XOR43 are constructed to be connected to respective input terminals of an OR gate OR44, the output of which is input into an AND gate AND45 along with the system clock.

Referring to Figure 3, the pseudo random signal generating portion 30 consists of one AND gate AND3, 8 shift registers SRa-SRh and one exclusive OR gate XOR100.

The operation of the circuit of Figure 2 will now be described. The input signal is shifted through 8 shift registers (not shown) of the shift register portion 10 and is thereafter output to the comparison portion 20. The shifted signal is analysed by the comparison portion 20 to determine whether it is 65 (0110 0101), i.e. the initial 8 bits of an even frame synchronizing signal, or 9A (1001 1010), the intitial 8 bits of an odd frame synchronizing signal. If it is determined that it is 65 or 9A, a start control signal is output to the pseudo random signal generating portion 30 under an assumption that a frame synchronizing signal is being received.

The control signal of the comparison portion 20 is input into one input terminal of the AND gate AND3 of the pseudo random signal generating portion 30. A system clock (Main clock) is input into the other input terminal, so that a signal is output which shifts sequentially the initial 65 (0110 0101) seed value, set in the shift registers SRa-SRh.

The pseudo random signal output by the shift register SRa is input to an input terminal of each of the exclusive OR gates XOR42 and XOR43 of the logic portion 40, in order to be combined logically with the received signal output by the shift register portion 10, and is, at the same time, input into the exclusive OR gate XOR100. The output of the shift register SRb is input into the other input terminal of the exclusive OR gate XOR100, so that a subsequent logic value is in turn input into the shift register SRh.

The 65 (0110 0101) value initially set in the shift registers SRa-SRh is shifted in response to an output signal of the AND gate AND3, and the frame synchronizing signals (0110 0101 1010 ..... 0100 0110) are generated by the exclusive OR gate XOR100 and the shift registers SRa-SRh to thereafter be output to the exclusive OR gates XOR42, XOR43 and XOR100.

A reference frame synchronizing signal output by the pseudo random signal generating portion 30 is applied to an input terminal of each of the exclusive OR gates XOR42 and XOR43. The original reception signal, shifted and output by the shift register portion 10, is applied to the other input terminal of the exclusive OR gate XOR42 and to the other input terminal of the exclusive OR gate XOR43 after being inverted at the inverter INT41.

In other words, even frame synchronizing signals are detected using the inverter INT41, exclusive OR gate XOR43 and OR gate OR44, and odd frame synchronizing signals are detected through exclusive OR gates XOR42 and OR gate OR44.

One input terminal of the AND gate AND45 is coupled to the output of the OR gate OR44 and the other input terminal of the AND gate AND45 is provided with a D/D2 MAC system clock of 20.25 MHz and according to the system clock, the received frame synchronizing signal is thereby output to the counting portion 50.

Thus, when the pseudo random signal generating portion 30 starts operation, the output of the shift register portion 10 and the pseudo random signal generating portion 30 are logically compared by the logic portion 40. If the output of the logic portion 40 is a normal frame synchronizing signal, the output of the logic portion 40 will output 64 logic '1's.

The output value of the logic portion 40 is counted by the counting portion 50. If the output is a normal frame synchronizing signal, the counted value will be 64. However, there may arise an occasion when a few bits of the synchronising signal are corrupted. This is overcome by arranging the counting portion 50 to give an output when the count reaches a value below 64. For instance, when a maximum allowable error is 3 bits, and when the counted value from the synchronizing signal discriminating portion 60 is 62, it is determined that the frame synchronizing signal has been received.

According to the present invention a simple circuit can be constructed which may use a pseudo random signal generator. Even if an error occurs during transmission, the corrupted signal may still be identified. Furthermore, the circuit can be applied to many systems which call for detection of a synchronizing signal or other predetermined signal.

## Claims

1. A detector for detecting a predetermined digital signal code comprising:
means (10) for identifying a potential code portion of an input signal from the presence therein of a predetermined bit subsequence from said predetermined digital signal code;
reference code producing means (30) responsive to the means for identifying a potential code portion to produce a reference code;
comparing means (40) for serially comparing the reference code bit-for-bit with an identified potential code portion; and
counting means (50) responsive to the comparing means to count the number of bits of an identified potential code portion which match the corresponding bits of the reference code, and output a code detected signal when a predetermined count value is reached.

2. A detector according to claim 1, wherein the predetermined bit subsequence is a predetermined number of initial bits of said code.

3. A detector according to claim 1 or 2, wherein the reference code producing means (30) comprises a pseudo-random number generator.

4. A detector according to claim 3, wherein the pseudo-random number generator (30) is seeded with a predetermined number of initial bits of said code.

5. A detector according to any preceding claim, wherein the comparing means (40) includes inverter means (41) for inverting the reference code and means (XOR43) for comparing the inverted reference code with said potential code portion.

6. A detector according to any preceding claim, wherein the reference code is a sync code of a D MAC or D2 MAC signal.

7. A detector according to any preceding claim, wherein the predetermined count value is less than the number of bits in the reference code.

8. A method of detecting a predetermined digital signal code comprising the steps of:
(a) identifying a potential code portion of an input signal from the presence therein of a predetermined bit subsequence from said predetermined digital signal code;
(b) producing a reference code in reponse to an identification made in step (a);
(c) counting the number of bits of said potential code portion which match the corresponding bit in the reference code; and
(d) indicating that the predetermined code has occured in the input signal, if the result of step (c) is greater than a predetermined value.

## Patentansprüche

1. Detektor zum Erkennen eines vorbestimmten digitalen Signalcodes mit folgendem:
einem Mittel (10) zum Kennzeichnen eines möglichen Codeteils eines Eingangssignals aus dem Vorhandensein einer vorbestimmten Bit-Teilfolge aus dem besagten vorbestimmten digitalen Signalcode in diesem Eingangssignal;
einem auf das Mittel zum Kennzeichnen eines möglichen Codeteils reagierenden Bezugscodeerzeugungsmittel (30) zum Erzeugen eines Bezugscodes;
einem Vergleichsmittel (40) zum seriellen bitweisen Vergleichen des Bezugscodes mit einem gekennzeichneten möglichen Codeteil; und
einem auf das Vergleichsmittel reagierenden Zählmittel (50) zum Zählen der Anzahl von Bit eines gekennzeichneten möglichen Codeteils, die mit den entsprechenden Bit des Bezugscodes übereinstimmen, und Ausgeben eines Code-erkannt-Signals, wenn ein vorbestimmter Zählwert erreicht wird.

2. Detektor nach Anspruch 1, wobei die vorbestimmte Bit-Teilfolge eine vorbestimmte Anzahl von Anfangsbit des besagten Codes ist.

3. Detektor nach Anspruch 1 oder 2, wobei das Bezugscodeerzeugungsmittel (30) einen Pseudozufallsfolgengenerator umfaßt.

4. Detektor nach Anspruch 3, wobei dem Pseudozufallsfolgengenerator (30) eine vorbestimmte Anzahl von Anfangsbit des besagten Codes als Anfangswert eingegeben wird.

5. Detektor nach einem vorhergehenden Anspruch, wobei das Vergleichsmittel (40) ein Invertermittel (41) zum Invertieren des Bezugscodes und ein Mittel (XOR43) zum Vergleichen des invertierten Bezugscodes mit dem besagten möglichen Codeteil enthält.

6. Detektor nach einem vorhergehenden Anspruch, wobei der Bezugscode ein Synchroncode eines D-MAC- oder D2-MAC-Signals ist.

7. Detektor nach einem vorhergehenden Anspruch, wobei der vorbestimmte Zählwert geringer als die Anzahl von Bit im Bezugscode ist.

8. Verfahren zur Erkennung eines vorbestimmten digitalen Signalcodes mit folgenden Schritten:
(a) Kennzeichnen eines möglichen Codeteils eines Eingangssignals aus dem Vorhandensein einer vorbestimmten Bit-Teilfolge aus dem besagten vorbestimmten digitalen Signalcode in diesem Eingangssignal;
(b) Erzeugen eines Bezugscodes als Reaktion auf eine in Schritt (a) durchgeführte Kennzeichnung;
(c) Zählen der Anzahl von Bit des besagten möglichen Codeteils, die mit dem entsprechenden Bit im Bezugscode übereinstimmen; und
(d) Anzeigen, daß der vorbestimmte Code im Eingangssignal aufgetreten ist, wenn das Ergebnis des Schritts (c) größer als ein vorbestimmter Wert ist.

## Revendications

1. Détecteur pour détecter un code de signaux numériques prédéterminé comprenant :
des moyens (10) pour identifier une portion de code potentiel d'un signal d'entrée à partir de la présence dans ce signal d'une sous-séquence de bits prédéterminée en provenance dudit code de signaux numériques prédéterminé ;
des moyens de production d'un code de référence (30) sensibles aux moyens pour identifier une portion de code potentiel pour produire un code de référence ;
des moyens de comparaison (40) pour comparer en série bit par bit le code de référence avec une portion de code potentiel identifiée ; et
des moyens de comptage (50) sensibles aux moyens de comparaison pour compter le nombre de bits d'une portion de code potentiel identifiée qui correspondent aux bits correspondants du code de référence, et pour émettre un signal de code détecté lorsqu'une valeur de compte prédéterminé est atteinte.

2. Détecteur selon la revendication 1, dans lequel la sous-séquence de bits prédéterminée est un nombre prédéterminé de bits initiaux dudit code.

3. Détecteur selon la revendication 1 ou la revendication 2, dans lequel les moyens de production du code de référence (30) comprennent un générateur de nombres pseudo-aléatoires.

4. Détecteur selon la revendication 3, dans lequel le générateur de nombres pseudo-aléatoires (30) est amorcé avec un nombre prédéterminé de bits initiaux dudit code.

5. Détecteur selon l'une des revendications précédentes, dans lequel les moyens de comparaison (40) comprennent des moyens inverseurs (41) pour inverser le code de référence et des moyens (XOR43) pour comparer le code de référence inversé avec ladite portion de code potentiel.

6. Détecteur selon l'une des revendications précédentes, dans lequel le code de référence est un code de synchronisation d'un signal D MAC ou D2 MAC.

7. Détecteur selon l'une des revendications précédentes, dans lequel la valeur de compte prédéterminée est inférieure au nombre de bits du code de référence.

8. Procédé de détection d'un code de signaux numériques prédéterminé comprenant les étapes suivantes :
(a) identifier une portion de code potentiel d'un signal d'entrée à partir de la présence dans ce signal d'une sous-séquence de bits prédéterminée en provenance dudit code de signaux numériques prédéterminé ;
(b) produire un code de référence en réponse à une identification effectuée dans l'étape (a) ;
(c) compter le nombre de bits de ladite portion de code potentiel qui correspondent aux bits correspondants dans le code de référence ; et
(d) indiquer que le code prédéterminé est apparu dans le signal d'entrée, si le résultat de l'étape (c) est supérieur à une valeur prédéterminée.
